# EUROPÄISCHE PATENTSCHRIFT

(11) **EP 2 374 841 B1**
(45) Veröffentlichungstag und Bekanntmachung des Hinweises auf die Patenterteilung: **03.09.2014**
(21) Anmeldenummer: 10159525.4
(22) Anmeldetag: 09.04.2010
(51) Int. Cl.: C08K 3/00, F21S 2/00, G02B 5/02

(54) **Transparentes Kunststoffmaterial**
Transparent plastic material
Matériau en plastique transparent

(43) Veröffentlichungstag der Anmeldung: 12.10.2011
(73) Patentinhaber: almaak international GmbH, 47800 Krefeld (DE)
(72) Erfinder: Menke, Jan Meik, 38640 Goslas (DE); Schmeinta, Thomas, 40699 Erkrath (DE); Eichstädt, Olaf, 45881 Gelsenkirchen (DE)
(74) Vertreter: Stark, Walter

(56) Entgegenhaltungen:
- EP-A1- 1 912 082
- WO-A2-2007/076430
- DE-T5-112005 000 835
- DE-U1-202004 016 363
- US-A1- 2007 297 168
- US-B1- 6 852 396
- DATABASE WPI Week 199813 Thomson Scientific, London, GB; AN 1998-141149 XP002586806 -& JP 10 017761 A (TEIJIN KASEI LTD) 20. Januar 1998 (1998-01-20)

## Beschreibung

Die Erfindung betrifft eine Streu- bzw. Lichtscheibe für eine Kfz-hiehtquelle, die aus einem transparenten Kunststoffmaterial, wie z. B. Polycarbonat, Polycarbonat-HT, Polymethylacrylat, Acrylnitril-Butadien-Styrol (ABS), besteht. Solche transparente Kunststoffmaterialien sind aus der Praxis bekannt und werden für den Einsatz als Streu- bzw. Lichtscheibe bei Kfz-Lichtquellen verwendet.

Nachteilig hierbei ist, dass die seitliche Lichtstreuung bei Anwendungszwecken, bei denen auf eine linsenförmige oder anderweitig profilierte Gestaltung des Kunetstoffmaterials, insbesondere aus optischen Gründen, verzichtet wird, relativ gering ist und häufig ein Erkennen der Lichtquelle aus einem seitlichen Winkel entweder gar nicht oder aber zumindest nicht sicher möglich ist.

Aufgabe der Erfindung ist es, die vorgenannten Nachteile zu vermeiden und ein transparentes Kunststoffmaterial anzugegen, welches eine verbesserte seitliche Lichtstreuung aufweist.

Diese Aufgabe wird dadurch gelöst, dass in das Kunststoffmaterial ein Streumedium eingebettet ist, welches in zumindest einer Durchleuchtungsrichtung eine seitliche Lichtstreuung bewirkt. Dabei bleibt der klare und transparente optische Eindruck des Kunststoffmaterials im Wesentlichen erhalten.

***Dabei umfasst das Streumedium Calcium-Aluminium-Borsilicat und*/*oder natürlichen Glimmer, so dass ein natürliches Produkt Verwendung findet*.**

***Vorzugsweise kann der Anteil Calcium-Aluminium-Borsilicat 70 - 100 Gewichts% umfassen. Vorteilhafterweise kann der Anteil natürlichen Glimmers 70 - 100 Gewichts% umfassen.***

Damit kann beispielsweise die Form des Scheinwerfers aus aerodynamischen und/oder optischen Gründen freier gewählt werden, ohne dass die lichttechnischen Eigenschaften einschließlich der seitlichen Lichtstreuungswerte einen Einsatz aus Sicherheitsgründen verhindern oder erschweren.

In Zusammenwirkung mit der Durchleuchtung des Kunststoffmaterials durch die Lichtquelle wird das Streumedium bei aktivierter Lichtquelle vom menschlichen Auge nicht bzw. nur untergeordnet wahrgenommen. Somit bleibt der klare und transparente optische Eindruck des Kunststoffmaterials im Wesentlichen erhalten.

Insoweit resultiert eine verbesserte seitliche Lichtstreuung insbesondere in Winkelbereichen von bis zu 15°. Sofern bereits das Material ohne Streumedium zu Streulicht führt, kann das Streumedium eine Verstärkung der Intensität des Streulichts um bis zu 100% gegenüber dem Material ohne Streumedium bewirken.

Dabei kann der Anteil des Streumediums bis zu 10 Gewichts% des Kunststoffmaterials ausmachen.

Ebenfalls kann das Streumedium Silicium-Dioxid und/oder Titan-Dioxid und/oder Zinnoxid, insbesondere jeweils bis zu 10 Gewichts%, umfassen.

Erfindungsgemäß kann die Korngröße 0,0001µm (=0,1nm) bis zu 2000µm (2mm) betragen, insbesondere 30µm bis zu 300µm.

## Patentansprüche

1. Streu- bzw. Lichtscheibe für eine Kfz-Lichtquelle, die aus einem transparenten Kunststoffmaterial, wie z. B. Polycarbonat, Polycarbonat-HT, Polymethylacrylat, Acrylnitril-Butadien-Styrol (ABS), besteht **dadurch gekennzeichnet, dass** in das Kunststoffmaterial ein Streumedium eingebettet ist, welches in zumindest einer Durchleuchtungsrichtung eine seitliche Lichtstreuung bewirkt, wobei das Streumedium Calcium-Aluminium-Borsilicat, insbesondere zu 70 - 100 Gewichts% umfasst und/oder wobei das Streumedium natürlichen Glimmer, insbesondere zu 70 - 100 Gewichts% umfasst.

2. Streu- bzw. Lichtscheibe für eine Kfz-Lichtquelle nach dem vorhergehenden Anspruch, **dadurch gekennzeichnet, dass** der Anteil Calcium-Aluminium-Borsilicat 70 - 100 Gewichts% umfasst.

3. Streu- bzw. Lichtscheibe für eine Kfz-Lichtquelle nach Anspruch 1, **dadurch gekennzeichnet, dass** der Anteil natürlichen Glimmers 70 - 100 Gewichts% umfasst.

4. Streu- bzw. Lichtscheibe für eine Kfz-Lichtquelle nach einem der vorhergehenden Ansprüche, **dadurch gekennzeichnet, dass** der Anteil des Streumediums bis zu 10 Gewichts% des Kunststoffmaterials ausmacht.

5. Streu- bzw. Lichtscheibe für eine Kfz-Lichtquelle nach einem der vorhergehenden Ansprüche, **dadurch gekennzeichnet, dass** das Streumedium Silicium-Dioxid umfasst.

6. Streu- bzw. Lichtscheibe für eine Kfz-Lichtquelle nach Anspruch 5, **dadurch gekennzeichnet, dass** der Anteil Silicium-Dioxid bis zu 10 Gewichts% umfasst.

7. Streu- bzw. Lichtscheibe für eine Kfz-Lichtquelle nach einem der vorhergehenden Ansprüche, **dadurch gekennzeichnet, dass** das Streumedium Titan-Dioxid umfasst.

8. Streu- bzw. Lichtscheibe für eine Kfz-Lichtquelle nach Anspruch 7, **dadurch gekennzeichnet, dass** der Anteil Titan-Dioxid bis zu 10 Gewichts% umfasst.

9. Streu- bzw. Lichtscheibe für eine Kfz-Lichtquelle nach einem der vorhergehenden Ansprüche, **dadurch gekennzeichnet, dass** das Streumedium Zinnoxid, insbesondere zu bis zu 10 Gewichts%, umfasst.

10. Streu- bzw. Lichtscheibe für eine Kfz-Lichtquelle nach Anspruch 9, **dadurch gekennzeichnet, dass** der Anteil Zinn-Dioxid bis zu 10 Gewichts% umfasst.

11. Streu- bzw. Lichtscheibe für eine Kfz-Lichtquelle nach einem der vorhergehenden Ansprüche, **dadurch gekennzeichnet, dass** die Korngröße 0,0001m (=0,1nm) bis zu 2000µm (2mm) beträgt.

## Claims

1. Scatter disk or light disk for a motor vehicle light source, which consists of a transparent plastic material such as polycarbonate, polycarbonate-HT, polymethylacrylate, acrylonitrile butadiene styrene (ABS), **characterised in that** a scatter medium is embedded in the plastic material which effects, in at least one transillumination direction, a lateral light scatter, wherein the scatter medium comprises calcium aluminium borosilicate, particularly 70-100% by weight, and/or wherein the scatter medium comprises natural mica, particularly 70-100% by weight.

2. Scatter disk or light disk for a motor vehicle light source according to claim 1, **characterised in that** the proportion of calcium aluminium borosilicate comprises 70-100% by weight.

3. Scatter disk or light disk for a motor vehicle light source according to claim 1, **characterised in that** the proportion of natural mica comprises 70-100% by weight.

4. Scatter disk or light disk for a motor vehicle light source according to any one of the preceding claims, **characterised in that** the proportion of the scatter medium represents up to 10% by weight of the plastic material.

5. Scatter disk or light disk for a motor vehicle light source according to any one of the preceding claims, **characterised in that** the scatter medium comprises silicon dioxide.

6. Scatter disk or light disk for a motor vehicle light source according to claim 5, **characterised in that** the proportion of silicon dioxide comprises up to 10% by weight.

7. Scatter disk or light disk for a motor vehicle light source according to any one of the preceding claims, **characterised in that** the scatter medium comprises titanium dioxide.

8. Scatter disk or light disk for a motor vehicle light source according to claim 7, **characterised in that** the proportion of titanium dioxide comprises up to 10% by weight.

9. Scatter disk or light disk for a motor vehicle light source according to any one of the preceding claims, **characterised in that** the scatter medium comprises tin oxide, particularly up to 10% by weight.

10. Scatter disk or light disk for a motor vehicle light source according to claim 9, **characterised in that** the proportion of tin dioxide comprises up to 10% by weight.

11. Scatter disk or light disk for a motor vehicle light source according to any one of the preceding claims, **characterised in that** the particle size is 0.0001 µm (=0.1 nm) up to 2000µm (2mm).

## Revendications

1. Verre diffuseur ou transparent pour une source lumineuse de véhicules automobiles, qui est composé d'une matière plastique transparente, comme par exemple de polycarbonate, polycarbonate HT, polyméthylacrylate, acrylonitrile butadiène styrène (ABS), **caractérisé en ce que** dans la matière plastique est incorporé un milieu diffusant qui produit une diffusion de lumière latérale dans au moins une direction d'éclairage par transparence, le milieu diffusant comprenant du borosilicate de calcium et d'aluminium, en particulier dans une proportion comprise entre 70 et 100 % en poids, et/ou le milieu diffusant comprenant du mica naturel, en particulier dans une proportion comprise entre 70 et 100 % en poids.

2. Verre diffuseur ou transparent pour une source lumineuse de véhicules automobiles selon la revendication précédente, **caractérisé en ce que** la proportion de borosilicate de calcium et d'aluminium est comprise entre 70 et 100 % en poids.

3. Verre diffuseur ou transparent pour une source lumineuse de véhicules automobiles selon la revendication 1, **caractérisé en ce que** la proportion de mica naturel est comprise entre 70 et 100 % en poids.

4. Verre diffuseur ou transparent pour une source lumineuse de véhicules automobiles selon l'une des revendications précédentes, **caractérisé en ce que** la proportion de milieu diffusant représente jusqu'à 10 % en poids de la matière plastique.

5. Verre diffuseur ou transparent pour une source lumineuse de véhicules automobiles selon l'une des revendications précédentes, **caractérisé en ce que** le milieu diffusant comprend du dioxyde de silicium.

6. Verre diffuseur ou transparent pour une source lumineuse de véhicules automobiles selon la revendication 5, **caractérisé en ce que** la proportion de dioxyde de silicium comprend jusqu'à 10 % en poids.

7. Verre diffuseur ou transparent pour une source lumineuse de véhicules automobiles selon l'une des revendications précédentes, **caractérisé en ce que** le milieu diffusant comprend du dioxyde de titane.

8. Verre diffuseur ou transparent pour une source lumineuse de véhicules automobiles selon la revendication 7, **caractérisé en ce que** la proportion de dioxyde de titane comprend jusqu'à 10 % en poids.

9. Verre diffuseur ou transparent pour une source lumineuse de véhicules automobiles selon l'une des revendications précédentes, **caractérisé en ce que** le milieu diffusant comprend de l'oxyde d'étain, en particulier dans une proportion allant jusqu'à 10 % en poids.

10. Verre diffuseur ou transparent pour une source lumineuse de véhicules automobiles selon la revendication 9, **caractérisé en ce que** la proportion d'oxyde d'étain comprend jusqu'à 10 % en poids.

11. Verre diffuseur ou transparent pour une source lumineuse de véhicules automobiles selon l'une des revendications précédentes, **caractérisé en ce que** la grosseur de grain est comprise entre 0,0001 µm (= 0,1 nm) et 2000 µm (2 mm).
